# EUROPÄISCHE PATENTANMELDUNG

(11) **EP 1 344 483 A1**
(43) Veröffentlichungstag der Anmeldung: **17.09.2003**
(21) Anmeldenummer: 03002857.5
(22) Anmeldetag: 08.02.2003
(51) Int. Cl.: A47L 9/24, A47L 9/32

(54) **Vorrichtung zur Bodenreinigung**

(30) Priorität: 15.03.2002 DE 10211650
(71) Anmelder: AEG Hausgeräte GmbH, 90429 Nürnberg (DE)
(72) Erfinder: Jansson, Matthias, 90402 Nürnberg (DE); Stettner, Gerhard, 90768 Fürth (DE); Cseleny, Karoly, 90762 Fürth (DE)

(57) **Zusammenfassung**

Vorrichtung zur Bodenreinigung, insbesondere Staubsauger mit einer Bodendüse, die über ein Rohr, einen Handgriff (2) und einen Saugschlauch (1) mit dem Handriff (2) mittels eines Fixierringes (3) lösbar verbunden ist und durch einen Verriegelungsknopf (6) durch Ein-Hand-Entriegelung abgekoppelt werden kann. Führungsmittel gewährleisten eine sichere Wiederherstellung der Verbindung. Ein teilweise trichterförmiger Einlaufstutzen (7) für den Saugschlauch (1) dient einer vergrößerten Bewegungsfreiheit des Saugschlauches (1) noch innerhalb eines Fixierringes (3).

## Beschreibung

Die Erfindung betrifft eine Vorrichtung zur Bodenreinigung, insbesondere Staubsauger, mit einer Bodendüse, die über ein Rohr, einen Handgriff und einen Saugschlauch mit dem Gerätegehäuse verbunden ist, wobei der Saugschlauch mit dem Handgriff mittels eines Fixierringes lösbar verbunden ist.

Eine solche Vorrichtung zur Bodenreinigung mit einem lösbaren Saugschlauch am Handgriff ist hinlänglich aus diversen Geräten bekannt. Beispielsweise ist bei der Gerätebaureihe 500/600 der Firma Miele offenbart, dass das Schlauchendstück mittels zweier Rastknöpfe am Handgriff befestigt ist bzw. durch Betätigen der Rastknöpfe der Saugschlauch vom Handgriff getrennt werden kann.

Dabei ergeben sich Probleme hinsichtlich der Handhabung der Entriegelungsfunktion, da die Rastknöpfe beidseitig am Durchmesser des Schlauchendstückes angebracht sind. Weitere Probleme ergeben sich hinsichtlich einer reduzierten Schlauchlänge, die um die Länge des Schlauchendstückes verringert ist. Darüber hinaus kann ein Aufschnappen oder Anbringen eines Zubehörhalters im Bereich der beiden Rastknöpfe sich als problematisch bzw. zumindest aufwendig darstellen.

Der Erfindung liegt nun die Aufgabe zugrunde, eine Vorrichtung zur Bodenreinigung darzustellen, bei der der Saugschlauch in einer einfachen Ausführungsform bei einer größtmöglichen bedienungsfreundlichen Handhabung vom Handgriff abgenommen werden kann.

Die Lösung der vorliegenden Aufgabe erfolgt bei einer solchen Vorrichtung zur Bodenreinigung erfindungsgemäß durch die kennzeichnenden Merkmale des Anspruches 1. Eine größtmögliche bedienungsfreundliche Handhabung ist durch einen Fixierring realisiert, dessen Ausführung mit Bedienungsund Führungsmitteln eine besonders einfach und sichere Verbindung zwischen Saugschlauch und Handgriff darstellt.

Eine vorteilhafte Ausgestaltung des Bedienungsmittels erstreckt sich in der Anbringung eines Verriegelungsknopfes. Dieser dient dem sicheren Hält von Saugschlauch und Handgriff im zusammengebauten Zustand. Bei der Betätigung des Verriegelungsknopfes, die unter Zuhilfenahme eines Fingers geschehen kann und dadurch als Ein-Hand-Entriegelung in besonders einfacher Weise durchführbar ist, gleitet der Fixierring, gestützt über die Führungsmittel aus der Verankerung am Handgriff.

Vorteilhafterweise ist der Verriegelungsknopf im Mantel des Fixierringes integriert. Die Anbindung des Verriegelungsknopfes ist über einen Steg realisiert, damit zwischen Fixierring und Verriegelungsknopf eine federnde Verbindung hergestellt ist und eine so gewonnene Rückstellkraft den Verriegelungsknopf ohne äußere Krafteinwirkung in seine Grundstellung zurückstellen bzw. zurückfedern läßt.

Eine vorteilhafte Weiterbildung der mittels Steg realisierten Anbindung von dem Verriegelungsknopf zum Mantel des Fixierringes ist die Herstellung einer einstückigen Darstellung von Verriegelungsknopf und Fixierring. Die Funktion der federnden Anbindung wird dabei zweckmäßigerweise durch die geometrische Form beeinflusst, denkbar ist ein Verjüngen des Querschnittes, ein Schlitzen des Steges oder ein gezielter Einsatz von unter- oder aufgesetzten Rippen.

Eine Weiterbildung der Federelemente könnte durch die Zuhilfenahme des Saugschlauches ausgeführt werden. Der von Innen gegen den Verriegelungsknopf anliegende Saugschlauch könnte mit seiner radial federnden Wirkung, bedingt durch .die zusammengeklebte mehrgängige Schraubenkontur und den außen liegenden Wülsten, das Federungsverhalten des Verriegelungsknopfes unterstützen. Weiterhin ist es zweckmäßig, wenn der Verriegelungsknopf in der normalen Arbeitshaltung, das heißt, dass der Handgriff das angeschlossene Rohr mit der Bodendüse auf der einen Seite und der angeschlossene Saugschlauch auf der anderen Seite in ungefährer Gürtelhöhe durch den Benutzer geführt wird, nach oben, also zum Benutzer hin zeigt. Damit ist der Verriegelungsknopf gut sichtbar, in seiner Funktion als Entriegelungsknopf selbst erklärend und ohne besondere Hinweise am Fixierring oder Handgriff bzw. einem Hinweis in der Gebrauchsanleitung präsent.

Das Anbringen eines Zubehörträgers, zum Beispiel ein Zubehörträger für Sonderdüsen oder Aufsätze jeglicher Art, ist durch ein Ergänzen mittels weiterer Befestigungsmerkmale am Fixierring leicht möglich. Die Befestigungsmerkmale können dabei aus Rippen, Stegen, Noppen oder Ähnlichem dargestellt werden, auch Vertiefungen oder Durchbrüche im Mantel des Fixierringes sind denkbar. Besonders vorteilhaft bieten sich hierfür die Flanken links und rechts um ca. 90° vom Verriegelungsknopf versetzten Fläche an. Funktionell ist somit ein ungewolltes Verrutschen des Zubehörträgers in radialer oder axialer Richtung zum Fixierring abgesichert.

Zur Lösung der Aufgabe dienen auch die Führungsmittel zwischen Fixierung und Handgriff. Die beiden vorzugsweise zylindrischen Bauteile sind vorteilhafterweise leicht konisch ausgearbeitet und überdecken sich im zusammengebauten Zustand über die gesamte Länge (Zylinderachse). Ein fester Verbund in radialer Richtung wird somit gewährleistet und in axialer Richtung übernimmt der Verriegelungsknopf die Sicherungsfunktion.

Um ein Ansaugen von Nebenluft zu verhindern wird günstigerweise zum Handgriff hin ein Dichtring in den Fixierring mit eingebracht. Dabei wird der Dichtring direkt mit dem Schlauch verklebt und hält für die zu lösende Handgriffseite eine umlaufende Dichtlippe bereit, welche im zusammengebauten Zustand eine dichte Verbindung zwischen Dichtring bzw. Saugschlauch und Handgriff darstellt. Eine einstückige Ausführung von Fixierring und Dichtring ist dabei ebenso denkbar wie der Einsatz eines Teiles mit zwei verschiedenen Werkstoffarten wie zum Beispiel einem 2K-Teil.

Zur weiteren Lösung der Aufgabe ist der Fixierring mit seinem Mantel auf der zum Saugschlauch hin gerichteten Seite im nach unten gerichteten Schalenbereich bis zum Erreichen des horizontal angenommenen Durchmessers trichterförmig ausgebildet. Damit ist es für den Saugschlauch möglich, bereits nach Verlassen der verklebten Längsüberdeckung in eine mehr oder weniger stark gekrümmte Abbiegung überzugehen. Somit ist das elastische Verhalten des Saugschlauches im Bereich des Fixierringes nicht mehr behindert.

Vorzugsweise ist diese Ausführungsform durch ein Verkürzen des trichterförmigen Einlaufstutzens noch zu unterstützen. Es ist somit gewährleistet, dass der Aussendurchmesser am trichterförmigen Ende des Fixierringes nicht zu stark anwächst. Zusätzlich ist mit dem verbleibenden restlichen trichterförmigen Einlaufstutzen eine genügend große Stützwirkung für den abbiegenden Saugschlauch gewährleistet.

Die Erfindung ist im Folgenden anhand der Zeichnungen eines Ausführungsbeispieles näher erläutert. Hierbei zeigt:
- Figur 1: einen zusammengesetzten Saugschlauch mit Fixier ring und Gerätegehäuse-Anschlussteil,
- Figur 2: einen Handgriff als Verbindungselement zwischen Saugschlauch und Staubsaugerrohr und
- Figur 3: den Fixierring als Einzelteil.

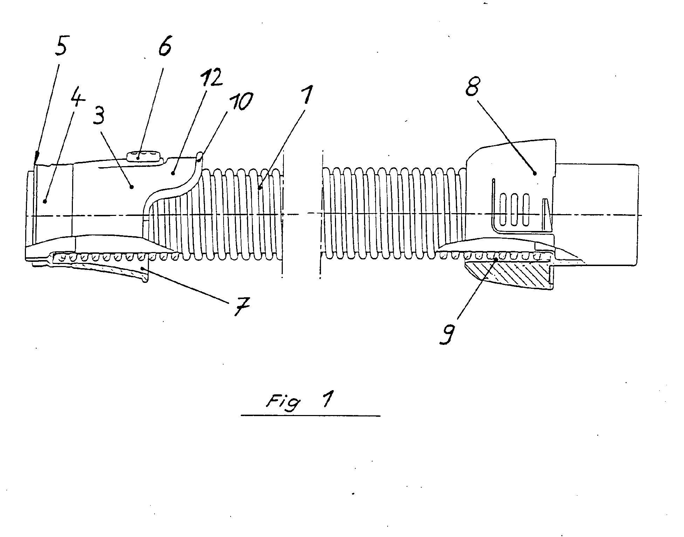

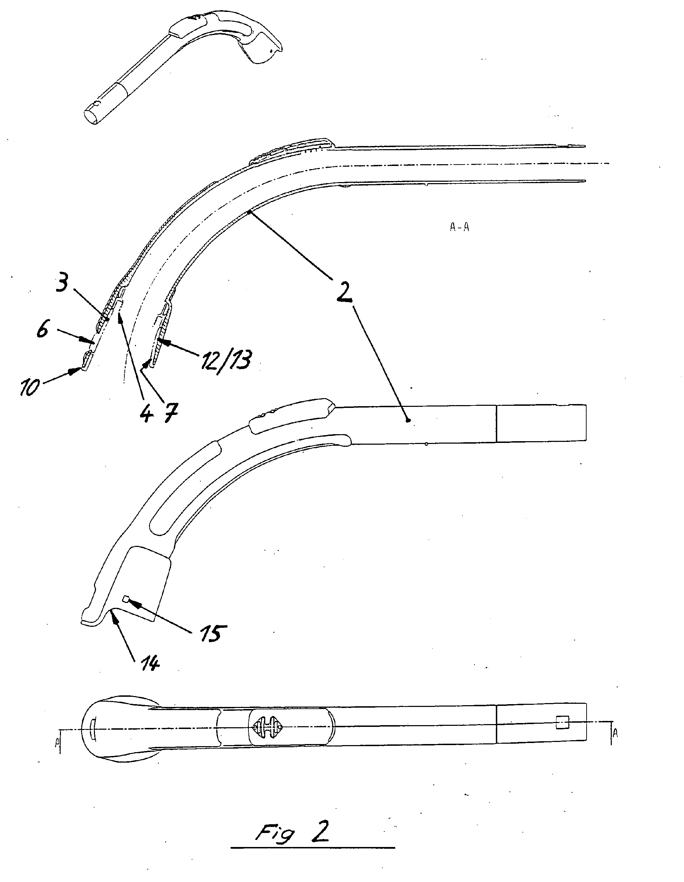

Figur 1 zeigt einen Saugschlauch 1 mit an seinen Enden angebauten Verbindungsteilen. Links, zu einem Handgriff 2 (siehe Fig. 2) hin, ist dabei ein Fixierring 3 mit einem Dichtring 4 und einer damit verbundenen Dichtlippe 5 ersichtlich. Auf der oberen Seite ist ein Verriegelungsknopf 6 und im unteren aufgeschnittenen Teilbereich des Fixierringes 3 ein teilweise trichterförmig ausgebildeter Einlaufstutzen 7 erkennbar. Rechts, zum Gerätegehäuse des Staubsaugers hin, ist ein Gerätegehäuse-Anschlussteil 8 abgebildet, wobei im unteren aufgeschnittenen Teilbereich ein zylindrisch ausgebildeter Einlauf'stutzen 9 erkennbar ist.

Auf beiden Seiten ist im Ausführungsbeispiel der Saugschlauch 1 am Ende mit dem Dichtring 4 bzw. dem Gerätegehäuse-Anschlussteil 8 derart verklebt, dass bei laufendem Gebläse, d. h. bei vorherrschendem Unterdruck im Luftkanal, keine Nebenluft aus der Umgebung in den Saugschlauch gelangen kann. Somit ist der Saugschlauch samt Anbauteilen als nahezu dicht zu betrachten.

Beim _{"}Umgreifen" des Saugschlauches 1 im Bereich des Handgriff-Anschlussteiles mit einer Hand ist es möglich, den Verriegelungsknopf 6 zu betätigen und gleichzeitig den Saugschlauch 1 samt Fixierring 3 aus dem Handgriff 2 herauszuziehen. Die vorliegende Ein-Hand-Entriegelung ist somit in einfacher Weise realisiert.

Figur 2 zeigt den Handgriff 2 in verschiedenen Ansichten. Neben diversen Anbauteilen ist der eingeschobene Fixierring 3 mit in der Schnittdarstellung A-A erkennbarem Dichtring 4 und der daran angespritzten Dichtlippe 5 ersichtlich. Der Dichtring 4 dient dabei mit einer umlaufenden und direkt mit dem Handgriff 2 in Kontakt stehenden Dichtlippe 5 der Abdichtung in Verbindung, so dass auch hier von einer nahezu nebenluftdichten Verbindung ausgegangen werden kann. Die Schnittdarstellung A-A zeigt im Querschnitt die Führung zwischen Handgriff 2 und dem Fixierring 3, welche sich über den gesamten Umfang erstreckt und den Fixierring in radialer Richtung festhält. Die axiale Bewegung wird durch den eingerasteten Verriegelungsknopf 6 und einem umlaufenden Bund 10 verhindert. Die Zusammensetzung von Handgriff 2 und Fixierung 3 erfolgt dabei im Rahmen von vorgegebenen Toleranzen ohne nennenswertem Spiel zwischen den Teilen.

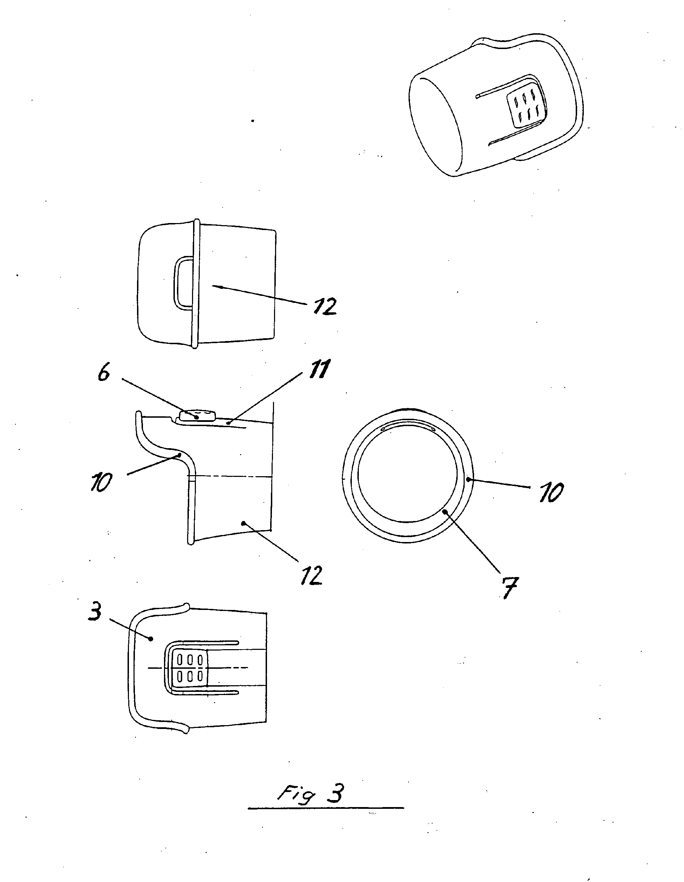

Figur 3 zeigt den Fixierring 3 als Einzelteil in verschiedenen Ansichten und einer räumlichen Darstellung. Zu erkennen ist die einstückige Ausführung von dem Fixierring 3 mit dem Verriegelungsknopf 6, welcher über einen Steg 11 mit dem restlichen Bauteil verbunden ist. Die federnde Wirkung ist durch eine U-förmige Durchbrechung rund um den Verriegelungsknopf 6 und den Steg 11 in den Fixierring 3 eingebracht worden. Die Erhöhung des Verriegelungsknopfes 6 dient hierbei als Versteifungskomponente, wodurch sich die federnde und dadurch abbiegende Strecke im Bereich des Steges 11 befindet.

Die gesamte äußere Mantelfläche 12 verläuft leicht konisch und bildet im wesentlichen genau das Gegenstück zu einer inneren Mantelfläche 13 des Handgriffes 2 im Bereich der Überdeckung. Ebenso ist der umlaufende Bund 10 in seiner Kontur passend zu einer Abschlusskante 14 des Handgriffes 2 ausgeführt.

Die Seitenansicht ermöglicht noch einen Blick auf den teilweise trichterförmigen Einlaufstutzen 7, wobei zu erkennen ist, dass nur die untere Halbschale trichterförmig ausgebildet ist und ein fließender Übergang zur oberen zylindrischen Hälbschale vorhanden ist. In Ergänzung zur beispielhaften Ausführung ist denkbar, dass im Bereich der Überdekkung von Handgriff 2 und Fixierring 3 Befestigungsmittel für einen Zubehörträger auf der Aussenseite des Handgriffes 2 dargestellt werden. Bildlich dargestellt sind hierbei zwei rechteckige Durchbrüche 15 links und rechts auf der horizontalen Mittelachse.

### Bezugszeichenliste

- Saugschlauch: 1
- Handgriff: 2
- Fixierring: 3
- Dichtring: 4
- Dichtlippe: 5
- Verriegelungsknopf: 6
- Trichterförmiger Einlaufstutzen: 7
- Gerätegehäuse-Anschlussteil: 8
- Zylindrischer Einlaufstutzen: 9
- Umlaufender Bund: 10
- Federnder Steg: 11
- Äußere Mantelfläche: 12
- Innere Mantelfläche: 13
- Abschlußkante: 14
- Rechteckige Durchbrüche: 15

## Patentansprüche

1. Vorrichtung zur Bodenreinigung, insbesondere Staubsauger mit einer Bodendüse, die über ein Rohr, einen Handgriff (2) und einen Saugschlauch (1) mit dem Gerätegehäuse verbunden ist, wobei der Saugschlauch (1) mit dem Handgriff (2) mittels eines Fixierringes (3) lösbar verbunden ist, **dadurch gekennzeichnet, daß** der Fixierring (3) Bedienungsmittel für eine Ein-Hand-Entriegelung der Handgriff-Saugschlauch-Verbindung aufweist und daß Führungsmittel für die Wiederherstellung der Verbindung vorgesehen sind.

2. Vorrichtung nach Anspruch 1, **dadurch gekennzeichnet, daß** das Bedienungsmittel ein federnder Verriegelungsknopf (6) im Fixierring (3) ist.

3. Vorrichtung nach Anspruch 1 oder 2, **dadurch gekennzeichnet, daß** der Verriegelungsknopf (6) einstückig mit dem Fixierring (3) ausgebildet ist.

4. Vorrichtung nach einem der vorangegangen Ansprüche, **dadurch gekennzeichnet, daß** der Verriegelungsknopf (6) auf der Oberseite des Fixierringes (3) vorgesehen ist.

5. Vorrichtung nach einem der vorangegangenen Ansprüche, **dadurch gekennzeichnet, dass** der Verriegelungsknopf (6) derart durch Designelemente im Fixierring (3) dargestellt ist, damit sich dieser gut sichtbar und in seiner Funktion als Entriegelungsknopf selbsterklärend präsentiert.

6. Vorrichtung nach einem der vorangegangenen Ansprüche, **dadurch gekennzeichnet, daß** weitere Befestigungsmerkmale für einen Zubehörträger jeglicher Art links und rechts dicht an oder auf der horizontalen Mittelachse angebracht werden können.

7. Vorrichtung nach Anspruch 1, **dadurch gekennzeichnet, daß** die Führungsmittel zur Handgriffaufnahme über die gesamte Länge des Fixierrings (3) sich erstrecken.

8. Vorrichtung nach Anspruch 7, **dadurch gekennzeichnet, daß** am Fixierring (3) ein Dichtring (4) mit Dichtlippe (5) angebracht ist.

9. Vorrichtung nach Anspruch 7 oder 8, **dadurch gekennzeichnet, daß** der Saugschlauch (1) direkt mit dem Dichtring (4) verklebt ist.

10. Vorrichtung nach einem der vorangegangenen Ansprüche 7 bis 9, **dadurch gekennzeichnet, daß** die Verklebung von Saugschlauch und Dichtring eine feste Verbindung von Fixierring (3) zu Dichtring (4) darstellt.

11. Vorrichtung nach einem der Ansprüche 7 bis 9, **dadurch gekennzeichnet, daß** der Dichtring (4) zusammen mit dem Fixierring (3) einstückig ausgebildet ist.

12. Vorrichtung nach Anspruch 1, **dadurch gekennzeichnet, dass** weitere Führungsmittel auf der Saugschlauchseite im nach unten gerichteten Schalenbereich des Fixierrings (3) in Richtung des Saugschlauches (1) trichterförmig ausgebildet sind und/oder im nach unten gerichteten Schalenbereich des, Fixierringes (3) einen verkürzten Einlaufstutzen aufweisen.

13. Vorrichtung nach Anspruch 12, **dadurch gekennzeichnet, dass** die Bewegungsfreiheit des Saugschlauches (1) im Fixierring (3) im sich nach unten trichterförmig öffnenden Schalenbereich und/oder einem verkürzten Einlaufstutzen nicht behindert ist und dadurch ein Abbiegen des Saugschlauches (1) unmittelbar nach der Klebestelle erfolgen kann
